(19) Europäisches Patentamt / European Patent Office / Office européen des brevets

(11) **EP 2 945 416 B1**

(12) **EUROPEAN PATENT SPECIFICATION**

(45) Date of publication and mention
of the grant of the patent:
**11.04.2018 Bulletin 2018/15**

(51) Int Cl.:
*H04W 28/14* *(2009.01)*   *H04L 12/707* *(2013.01)*
*H04L 12/841* *(2013.01)*   *H04L 1/18* *(2006.01)*

(21) Application number: **14168191.6**

(22) Date of filing: **13.05.2014**

(54) **Method and apparatus for transmission of data over a plurality of networks**

Methode und Apparat für Übersendung von Daten über eine Mehrzahl von Netzwerken

Méthode et appareil pour transmission de données sur une pluralité de réseaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.11.2015 Bulletin 2015/47**

(73) Proprietor: **CELLXION LIMITED**
**Caterham, Surrey CR3 6LD (GB)**

(72) Inventors:
• **McTernan, Michael**
**Caterham, Surrey CR3 6LD (GB)**
• **Timson, Anthony**
**Caterham, Surrey CR3 6LD (GB)**

(74) Representative: **Spaargaren, Jerome**
**EIP**
**Fairfax House**
**15 Fulwood Place**
**London WC1V 6HU (GB)**

(56) References cited:
**EP-A1- 1 608 112     EP-A1- 1 705 845**
**EP-A1- 2 001 174     US-A1- 2003 072 269**
**US-A1- 2005 185 621**

**Description**

Field of the Invention

The present invention relates to a method and apparatus for the transmission of data over a plurality of network links. The invention has particular, but not exclusive, relevance when one or more of the plurality of network links is a wireless network link.

Background

Mobile communication devices, such as cellular telephones and portable computing devices (e.g. laptop computers and tablets), can communicate with remote devices using wireless communication techniques. Nowadays, users of the mobile communication devices wish, and even expect, to be able to carry out more and more applications. However, the operation of some of these applications is limited by the bandwidth and latency of the available wireless communication techniques.

A single good quality network link is the preferred connection between a wireless access point of a network, e.g. a base station of a public land mobile network (PLMN) or a WiFi router, and a mobile communication device. However, often this cannot be realised because mobile communication devices, by their nature, move into and out of various connection states with different network hosts. In addition, the quality of a network link can vary over time, for example due to levels of network traffic, and cannot be guaranteed to meet bandwidth and latency requirements at all times.

Various proposals have been made to address this problem. One suggestion is the use of compression techniques to reduce the amount of data sent, and accordingly the required bandwidth. For example, US patent application publication number US 2007/0247515, "Handheld video transmission and display" describes a wireless hand-held video player which uses compression techniques in order to make better use of the available bandwidth of a single wireless link. However, as the screen size and screen resolution of mobile devices increase, the amount of data required to provide a desired quality of video playback increases and improvements to compression techniques alone are unlikely to be able to manage this increase. Compression techniques are also known to increase overall latency, reducing the suitability of high compression techniques to real-time applications such as video games or video conferencing.

With the increase in the number of available mobile communication devices, there has also been an increase in the number of available wireless networks. Examples of available wireless networks include WiFi a/b/g/n, GPRS, E-GPRS, UMTS, Wi MAX, and LTE. These wireless networks provide network links with differing bandwidths and latencies. Most cities, and many populated rural areas, are now provided with coverage by multiple land-based cellular networks in addition to patches of coverage from WiFi hot-spots, all of which currently offer Internet Protocol (IP) packet based networks. This provides an opportunity for appropriately equipped devices to utilise one or more of these available wireless networks.

Inverse multiplexing is a specialised form of network routing that allows two network devices to be connected by more than one stable network link in order to transfer data more efficiently. This is achieved by the transmitting network device dividing data to be transmitted into different parts and then transmitting the different parts at the same time across respective network links. At the receiving network device, the different parts are reconstructed back into the original data. Sending data over a plurality of network links in this manner is termed aggregation. Some (or all) of the data may be duplicated on one or more of the network links to mitigate the effect of a failed link. This results in higher overall reliability. Inverse multiplexing techniques, if implemented correctly, can enable network devices to communication more effectively, and so support more demanding applications.

Known inverse multiplexing systems utilize stable network links with fixed endpoint addresses. Network links for mobile devices, on the other hand, are constantly changing. For example, the available wireless network links, as well as the bandwidth and latency in each available wireless network link, varies over time both as a function of the geographic position of the user and as a function of signal strength. In addition, activities by other users can also have an impact on the available resources of a wireless network. Furthermore, different wireless networks using different technologies (e.g. WiFi a/b/g/n, GPRS, E-GPRS, UMTS, WiMAX, LTE), as well as each technology potentially having different states of operation (e.g. UMTS user equipment may transfer data by different methods such as FACH, DCH, E-DCH), introduce different variations in the bandwidth and latency.

An inverse multiplexer which is able to cope with rapidly varying heterogeneous wireless network links, while aggregating bandwidth without incurring significant latency penalty or jitter is therefore desired. Such an inverse multiplexer would allow the implementation of more demanding applications without waiting for improvements to existing wireless network technologies.

EP-A-1608112 discusses a method of determining differential delay of at least two bonded links. A transmitting entity transmits at least some of the data packets to a receiving entity with time stamps indicating when the respective data packets were generated. The receiving entity derives a propagation delay for a data packet from its time stamp and time of arrival. Differential delay between different bonded links are determined.

Summary of the Invention

The present invention has been made with the aim of providing an improved inverse multiplexing technique that is applicable to varying heterogeneous wireless network links.

In accordance with an aspect of the invention, a method is provided as set out in claim 1.

In accordance with another aspect of the invention, a method is provided as set out in claim 9.

In accordance with an aspect of the invention, an apparatus is provided as set out in claim 12.

Advantageous features of the invention are set out in the dependent claims.

In accordance with another aspect of the invention, there is provided an inverse multiplexer comprising: an overall send window for receiving data to be transmitted to a remote network device; and a scheduler for directing data from the overall send window over the plurality of network links to the remote network device; wherein the scheduler is operable to: send first data over a first network link at a first transmission time to the remote network device; send second data over a second network link at a second transmission time to the remote network device; receive from the remote network device an indication of a time difference between the reception of said first data over the first network link and reception of said second data over the second network link; calculate a propagation time difference between the first network link and the second network link using the received time difference indication and the first and second transmission times; and determine a network link configuration and data sending order using the calculated propagation time difference. The scheduler may calculate the propagation time difference by subtracting the difference between the second transmission time and the first transmission time from the received time difference. The scheduler may further be operable to determine the network link configuration and data sending order using an estimate of the bandwidths of the network links. The scheduler is further operable to process a first acknowledgement from the second network device of receipt of said first data and a second acknowledgement from the second network device of receipt of said second data, said second acknowledgement including said time difference indication. The scheduler may send the data out-of-order over two or more of the plurality of network links.

The inverse multiplexer may comprise a plurality of network link specific send windows, each network link specific window receiving data for sending over a respective one of the plurality of network links, wherein the scheduler is operable to transfer data to the network link specific send windows in order to send data over the plurality of network links.

In accordance with a further aspect of the invention, there is provided a network device comprising: means for receiving first data from a remote network device over a first network link at a first reception time; means for receiving second data from the remote network device over a second network link at a second reception time; means for calculating the time difference between reception of the first data over the first network link and reception of the second data over the second network link;

And means for sending an indication of the calculated time difference to the remote network device. The second data may be a retransmission of the first data. The network device may further comprise: means for sending an acknowledgement to the first network device of the receipt of the first data; means for sending an acknowledgement to the first network device of the receipt of the second data; wherein the second acknowledgement includes said time difference indication.

By way of example only, various embodiments of the invention will now be described with reference to the accompanying drawings.

Brief Description of the Drawings

Figure 1 is a block diagram schematically showing the main components of a communication system in accordance with an embodiment.

Figure 2 is a diagram showing an Open Systems Interconnection (OSI) protocol stack utilised in the communication system shown in figure 1.

Figure 3 is a timing diagram showing an example of a sequence of messages sent in the communication system shown in figure 1.

Figure 4 is a flow diagram of the processes carried out at a transmitting scheduler included in the communication system shown in figure 1.

Figure 5 is a flow diagram of the processes carried out at a receiving scheduler included in the communication system shown in figure 1.

Detailed Description of the Preferred Embodiments

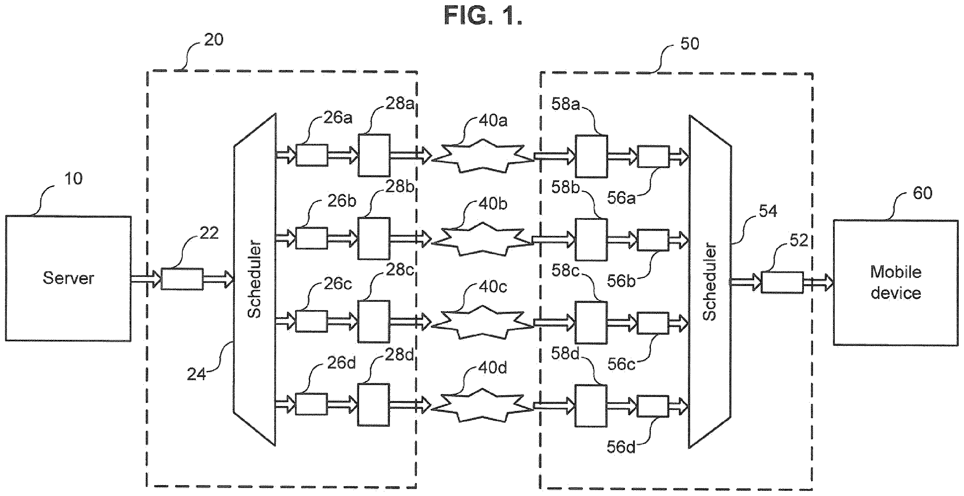

Figure 1 is a block diagram schematically showing a communication system to connect two intercommunicating network devices, in particular a server 10 and a mobile device 60. In the example the server 10 is a conventional server, such as a content or web server, and the mobile device 60 is a conventional mobile computing device, such as a laptop computer. Generally, data is downloaded in the direction from the server 10 to the mobile device 60 (indicated by arrows in Figure 1), and messages are sent in the upload direction from the mobile device 60 to the server 10.

As shown, the server 10 and mobile device 60 are interconnected via a plurality of network links 40a - 40d. Four network links are shown in the figure, but any number may be provided. The network links 40a - 40d can be any suitable network, including both wired and wireless (e.g. WiFi a/b/g/n, GPRS, E-GPRS, UMTS, WiMAX, LTE). The network links 40a -40d can all have the same network technology, all have different network technologies, or a mixture of similar and dissimilar network technologies. For example, the first network link 40a may be a wired link to a Local Area Network (LAN), the second network link 40b may be a wireless link to a PLMN, and the third and fourth network links 40c, 40d may be wireless links to respective WiFi networks. The number of available network links will change as the mobile device 60 moves into areas having different accessible networks. In addition, even if the mobile device 60 remains stationary, the number of utilized network links can change over time if one or more of the network links changes in transmission quality. Furthermore, one or more of the links may be asymmetric (i.e. the available bandwidth and latency in the downlink direction is different to that available in the uplink direction). The network links 40a - 40d are shown as independent networks for clarity, but they may overlap or share infrastructure in reality.

The server 10 is connected to an inverse multiplexer 20 (hereafter called the transmitting inverse multiplexer 20) according to the present invention. The transmitting inverse multiplexer 20 includes a plurality of network interfaces 28a-28d, each network interface 28 interfacing with a corresponding one of the plurality of network links 40a-40d. The transmitting inverse multiplexer 20 processes a data stream received from the server 10 to generate one or more data sub-streams. Each data sub-stream is output from the transmitting inverse multiplexer 20 via a respective network interface 28.

In this example, the transmitting inverse multiplexer is a network interface card removably mounted on an interface board of the server 10.

The mobile device 60 is connected to a second inverse multiplexer 50 (hereafter called the receiving inverse multiplexer 50) according to the present invention. In this example, the receiving inverse multiplexer 50 is removably connected to the mobile device 60 by a USB link. As shown in Figure 1, the receiving inverse multiplexer 50 has a plurality of network interfaces 58a-58d, each network interface 58 interfacing with a corresponding one of the network links 40. The receiving inverse multiplexer 50 processes the data sub-streams received by the network interfaces 58 to recover the data stream output by the server 10. The recovered data stream is then directed to the mobile device 60.

As shown in Figure 1, the transmitting inverse multiplexer 20 includes an overall send window 22, a transmitting scheduler 24, and a plurality of network link specific send windows 26a - 26d. The overall send window 22 of the inverse multiplexer 20 receives the data to be transmitted from the server 10. The overall send window 22 is connected to the transmitting scheduler 24, such that the data in the overall send window 22 is available to the transmitting scheduler 24. As will be discussed in more detail hereafter, the transmitting scheduler 24 evaluates the data to be transmitted and the quality of the network links 40a-40d, and determines the order in which the data is to be sent, and on which particular network link 40a-40d each component of data is to be sent. This determination is performed whenever one or more individual network links 40a-40d can accept data for sending, and is made to ensure efficient data transfer.

Once the determination has been made, the transmitting scheduler 24 selects and moves data from the overall sending window 22 into one or more of the available network link specific send windows 26a - 26d. The link specific send windows 26a-26d hold the data ready to send to the network interfaces 28a-28d. The transmitting scheduler 24 maintains records of what data has been passed to each of the network link specific send windows 26a - 26d, as well as the time of the local transmission (or transmission time-stamp) by the link specific send transceivers 28a-28d. These records are used in determining which network links are to be utilised at any particular time.

In addition to the plurality of network interfaces 58a -58d, the second inverse multiplexer 50 includes a plurality of network link specific reception windows 56a - 56d, a receiving scheduler 54, and an overall reception window 56. In the receiving inverse multiplexer 50, the network link specific reception windows 56a-56d hold the data received from the network interfaces 58a-58d. The receiving scheduler 54 takes the data from one or more of the network link specific reception windows 56a-56d and moves the data to the overall reception window 52. If necessary, the receiving scheduler 54 reorders the data, and deletes any duplicate data, before passing it to the overall reception window 52. Once the data is correctly assembled and re-ordered, the data in the overall reception window 52 is transferred to the mobile device 60.

As will be described in more detail hereafter, the receiving scheduler 54 also has a function of generating an acknowledgement that is returned to the transmitting scheduler 24. The acknowledgement includes the additional information that is used by the transmitting scheduler 24 to determine which order the data should be sent, and which network links 40a-40d should be utilised.

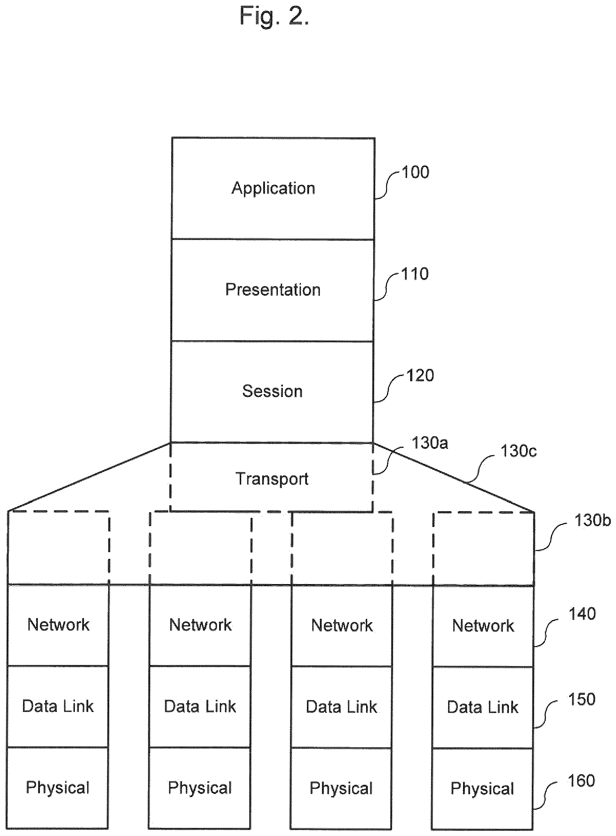

Figure 2 is a diagram showing an Open Systems Interconnection (OSI) protocol stack for the communication system illustrated in Figure 1. In the figure, layer 100 represents the application layer, layer 110 represents the presentation layer, layer 120 represents the session layer, sub-layers 130a and 130b represent the transport layer, layer 140 represents the network layer, layer 150 represents the data link layer, and layer 160 represents the physical layer. As shown, the usual transport layer of the protocol stack, as viewed by the OSI model, has been replaced with an upper transport sub-layer 130a and a plurality of lower transport sub-layers 130b. Conceptually, the transmitting inverse multiplexer 20 (or receiving inverse multiplexer 50) shown in figure 1 operates within the combination of the upper transport sub-layer 130a and the plurality of lower transport sub-layers 130b, indicated as 130c in figure 2. Accordingly, the details of data division and transport across the connecting networks 40a -40d is hidden from higher layers. In keeping with the OSI model, the layers above and below the upper and lower transport sub-layers 130a and 130b need no modification in order for the transmitting inverse multiplexer 20 and the receiving inverse multiplexer 50 to be utilised. This has the advantage of allowing existing applications and protocol stacks to be easily adapted. The lower transport sub-layers 130b relate to the inter-connection between the network devices and consist of multiple individual network links, each identified by a single network address at each end. In other words, the lower sub-layers 130b relate to the interconnection with the plurality of network links 40a- 40d shown in figure 1.

Within the lower sub-layers 130b, in this embodiment each individual network link uses a Transmission Control Protocol (TCP) connection, which reliably transfers data while limiting individual network link use according to round-trip-time, and bandwidth estimates as calculated from ACKs (acknowledgements) generated by a remote network device, as per normal TCP operation. In other words, TCP is used to ensure the reliable transmission of data across each distinct network link while estimating round-trip time and bandwidth. While the format for TCP is unchanged, the TCP implementation itself is modified to allow access to the connection measurements and metrics.

The benefit of using TCP at this level is that it allows for many intermediate network firewalls, routers and bridges to be traversed without special handling. The use of TCP enhancements (such as TCP Reno, Westwood or beyond), which may slightly improve individual connection performance without creating an overly large load on the network links, is not precluded. The API to use TCP sockets is also well standardised and understood, and by substituting the TCP implementation, the "TCP meltdown problem" that occurs when stacking or tunnelling TCP through TCP can be avoided.

While the upper transport sub-layer 130a and the plurality of lower transport sub-layers 130b are shown as distinct blocks in Figure 2, a more optimal implementation may choose to integrate the upper transport sub-layer 130a and the plurality of lower transport sub-layers 130b in order to provide better efficiency, and lower footprint. The stack may be proprietary such that direct addition of the upper transport sub-layer 130a and the plurality of lower transport sub-layers 130b to an existing protocol stack is difficult. In such cases, the arrangement of the implementation may be varied to embody the inverse-multiplexer within a Performance Enhancing Proxy (PEP) using split TCP as described in RFC3135. In this form a small modification is required to the TCP/IP protocol stack such that rather than forwarding data to a remote network device, it is delivered locally. This allows the TCP connection payloads to be accessed directly, free from overhead of packet headers and without TCP control packets having to traverse the network. The inverse-multiplexer 20 can then operate at an application level such that the data can be re-encapsulated and forwarded.

In the simplest implementation, the lower sub-layer 130b TCP connections are seen as a simple reliable data pipe through which messages can be transferred at the application level, over the normal TCP functions. In such a system, minimal modification is required to the TCP. However, as will be discussed below in more detail, additional overhead is created by the need to transmit additional information from the receiving scheduler 54 to the transmitting scheduler 24, in addition to that sent by TCP itself. In a preferred arrangement, TCP option fields can be used to augment existing TCP ACK messages with the required additional information.

An inverse multiplexing system as a whole requires a processing step at each of two communicating network devices. This processing step acts to transform original data into a format suitable for division between the plurality of utilised network links, directs the divided data through different networks, and then transforms the data back again to recover its original form at the receiving network device. Previously, the processing step has been standardised to bring the techniques of inverse multiplexing to a number of applications, such as low cost electrical Ethernet links on PC servers or workstations (e.g. IEEE 802.3ad), and inter-continental optical submarine communications cables. However, these current applications employ a plurality of stable network links where endpoints have fixed addresses, and which have been set up for the purpose of aggregation. As such, the characteristics of each network link changes slowly or can be considered stable under normal operating conditions. This means the processing step may easily be carried out and ensures the effect of aggregation is beneficial.

Where the properties of the various network links between two communicating network devices differ in some determinable manner (e.g. they are heterogeneous), the use of the different network links may be chosen to exploit this heterogeneity to an advantage. For example, where the network links have different latencies, a routing system may be employed to utilise only the quickest network link such that a server and a mobile device can communicate with the lowest possible delay. If there are differing financial costs to transport data on each of the network links, the cheapest network link may be selected in order to save money.

In order for an inverse multiplexing system to take advantage of varying heterogeneous wireless network links, there needs to be a way for an inverse multiplexer to determine which network links to use, when to use a particular network link, and how to format the data for transmission. This determination needs to be carried out repetitively such that any change in the network link states can be quickly detected. By repetitively performing the determination it is possible for the inverse multiplexer to adapt to changes in the network links, and so maintain maximum bandwidth with minimum latency. In the arrangement shown in figure 1, it is the transmitting scheduler 24 that makes this determination, with the help of the receiving scheduler 54.

The duplication of data across network links is not precluded, and as discussed below, may actually provide advantages in transmission reliability. Under some circumstances the transmitting scheduler 24 may also decide that no data should to be sent at a particular time.

The individual network links 40a -40d transport the data to the network link specific reception transceivers 58a-58d of the receiving inverse multiplexer 50. From the link specific reception transceivers 58a-58d, the data is sent to the network link specific reception windows 56a-56d. This process frees both the overall send window 22 and the link specific send windows 26a-26d of the transmitting inverse multiplexer 20 to make space for new input. Although not shown in figure 1, the entry and exit point of each network link 40a -40d may include a unique address.

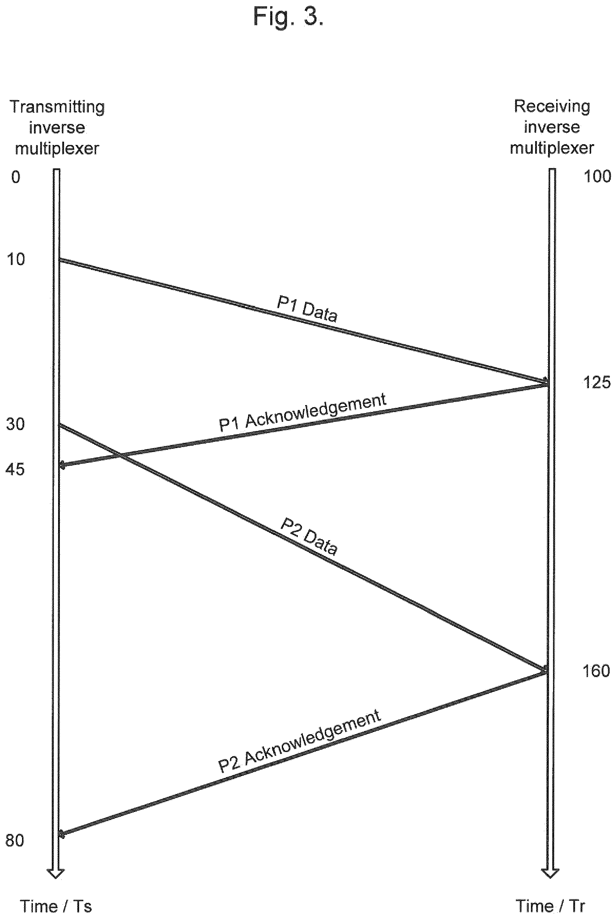

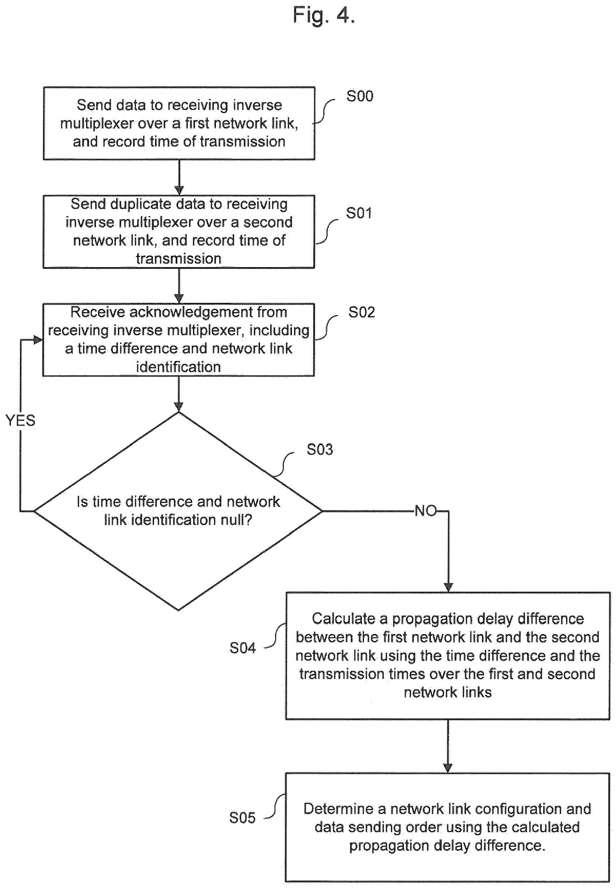

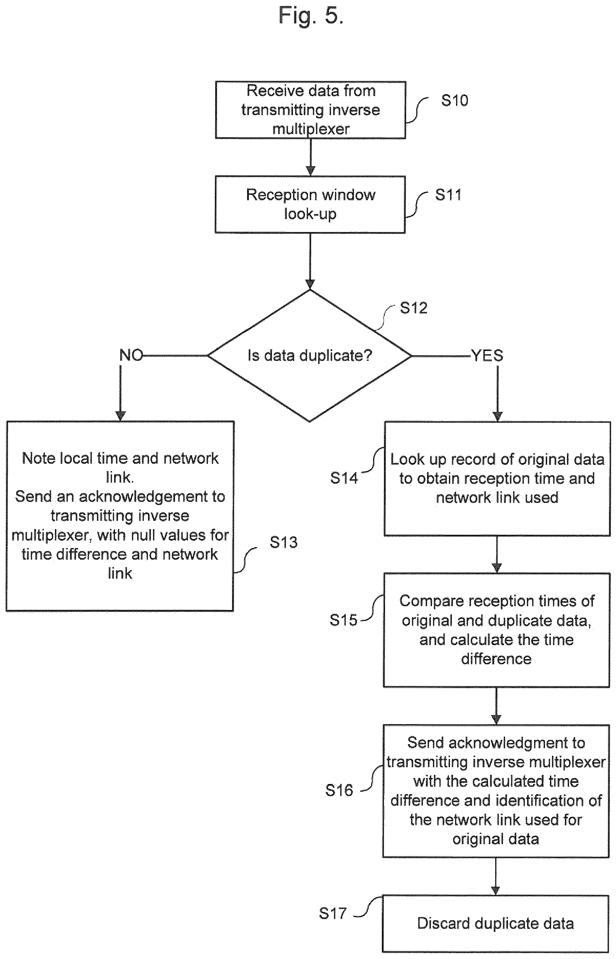

With reference to figures 3 to 5, an example of the process used by the transmitting scheduler 20 to determine which of the network links 40a-40d to use for the transmission of the data, and in what order the data should be sent, will now be described in more detail. Figure 3 is a timing diagram showing an example of a sequence of messages sent between the transmitting inverse multiplexer 20 and the receiving inverse multiplexer 50. Figure 4 shows a flow diagram of the processes carried out at the transmitting inverse multiplexer 20, while figure 5 shows the processes carried out by the receiving inverse multiplexer 50.

In figure 3, the transmitting inverse multiplexer 20 is represented on the left, with its local time base represented by Ts, while the receiving inverse multiplexer 50 is represented on the right with its local time base represented by Tr. Time increases down the y-axis. Ts and Tr need not be synchronised. For example, as illustrated Ts = 0 and Tr = 100 are at the origin of the graph. The two time-bases do need to be comparable such that they drift sufficiently slowly against each other such that no significant error is introduced to the calculations. The resolution of the clocks also needs to be a magnitude greater than the minimum expected network link latency that the system will experience.

Referring to figures 3 and 4, a first packet of data, $P_1$ data, is sent over a first network link 40a at time Ts = 10ms (step S00). The same packet of data, or duplicate data, $P_2$ data, is sent over a second network link 40b at time Ts = 30ms (step S01). The transmitting scheduler 24 keeps a record of the network link used, and the time of transmission (or time stamp) of the data (e.g. Ts = 10ms and 30ms, respectively).

As shown on the right hand side of figure 3, and step S10 of figure 5, the receiving inverse multiplexer 50 receives the $P_1$ data in a first link specific reception transceiver 58a at time Tr= 125ms, and the $P_2$ data in a second link specific reception transceiver 58a at time Tr=160.

Upon reception of data, the receiving scheduler 54 returns an acknowledgment to the transmitting scheduler 24. Together with the acknowledgement, the receiving scheduler 54 also sends additional information to the transmitting scheduler 24. The additional information sent depends on whether the data received is duplicate data. Once a data packet is moved to one of the network link specific reception windows 56a-56d from the link specific transceivers 58a-58d, the receiving scheduler 54 checks the remaining network link specific reception windows 56a-56d, and determines whether the received data packet is a duplicate (steps S11 and S12 of figure 5). This enables the receiving scheduler 54 to send the correct type of additional information to the transmitting scheduler 24.

The additional information includes a network link identification and a time difference. When duplicate data is received over a network link that is different from that of the network link used to send the original data, the network link identification identifies the network link used for sending the original data. In this context, it should be understood that "original data" refers to the first received data in case of receiving duplicate data, it does not refer to the data received by the overall sending window 22 from the sever 10. The network link identifier is determined from the locally held records in the receiving scheduler 54. The time difference represents the positive elapsed time (or time delta) between the original reception of the data and the reception of the duplicate data. If the data is original, null values are used for the network link identification and time difference.

In the present example, at the time of reception of the $P_1$ data, the receiving scheduler 54 generates and sends an acknowledgement $P_1$ACK at time Tr=125ms to the transmitting scheduler 24: The $P_1$ data is original data (i.e. query result in step S12 is NO), and so the acknowledgement, $P_1$ACK includes the additional information containing a null network link identification and null timing information. The receiving scheduler 54 also records the local time of reception of the data ($P_1$ data) and the first network link 40a as the network link used for the transmission of the data (step S13). in some systems the network interface 58 assists by recording the time at which a data packet entered the device (e.g. to support IEEE1588), otherwise the time can be taken from a local clock of suitable resolution.

Referring again to figure 3, at server time Ts=45, the transmitting scheduler 24 receives the acknowledgement P$_1$ACK and the additional information from the receiving scheduler 54 (step S02 of figure 4). The additional information sent with the acknowledgement P$_1$ACK are null values, and so the transmitting scheduler 24 waits for the acknowledgement of reception of the duplicate data P$_2$ data, (step S03 of figure 4). The transmitting scheduler calculates the round-trip time of the first network link 40a as 45 -10 = 35ms.

At the receiving inverse multiplexer time Tr=160, the duplicate P$_2$ data is received over the second network link 40b. Based on steps 510 to S12 (figure 5) the receiving scheduler 54 determines that this data is duplicate data (i.e. the result to the query in step S12 is YES). The receiving scheduler 54 looks-up its record for the first reception of the data (e.g. reception of P$_1$ data), to retrieve the original reception time and network link used for the transmission of the original data (step S14). In the present case the reception time of the original data P$_1$ data is Tr=125ms and this was received over the first network link 40a.

The receiving scheduler 54 compares the time of reception of the duplicate data and original data, and calculates a time difference (step S15). Again, the timings may be taken either from a network adaptor or a local clock. In the present case the time difference is calculated as being 160ms -125ms = 35 ms. The receiving scheduler 54 then sends the acknowledgement P$_2$ ACK to the transmitting scheduler 24, which includes the additional information of the time difference (35ms) and the identification of the network link used to transmit the original P$_1$ data (the first network link 40a) (step S16). The receiving scheduler 54 then discards the duplicate data, P$_2$ data, (step S17).

At transmitting inverse multiplexer time Ts=80, the second acknowledgment P$_2$ ACK is received from the receiving scheduler 54. The transmitting scheduler 24 calculates the round-trip-time of second network link 40b as 80 - 30 = 50ms. Given that the acknowledgement, P$_2$ACK, also includes the additional information, the transmitting scheduler checks whether this information contains null values (step S03 figure 4). In the present example, the time difference and the identification of the network link are not null (NO in step S03), and therefore the transmitting scheduler 24 carries out further processing to determine the characteristics of the network links. In particular, using the additional information, the transmitting scheduler 24 determines a propagation delay difference between the first network link 40a and the second network link 40b (step S04). The propagation delay is calculated using the received time difference (included with the acknowledgment P$_2$ ACK of the duplicate data) and the difference in the transmission times (times stamps) of the original and duplicate data, recorded by the transmitting scheduler 24. The calculation of the propagation delay between two network links is obtained by:

$$\text{Propagation delay} = \text{time difference at reception} - \text{time difference at transmission.}$$

In the present example, using its own records, the transmitting scheduler 24 knows that P$_1$ data and P$_2$ data were sent at Ts = 10 and 30ms, respectively. The transmitting scheduler 24 calculates the time difference at transmission as 30ms - 10ms = 20 ms. The transmitting scheduler 24 also knows the time difference at reception from the additional information sent from the receiving scheduler (P$_2$ACK), and subtracts the calculated time difference at transmission from the reported time difference. This is calculated as 35ms - 20ms = 15ms. Therefore, the propagation delay difference between the first network link 40a and the second network link 40b is determined as 15ms. In other words, the data sent on the second network link 40b took 15ms longer to arrive at the receiving inverse multiplexer 50 than the (same) data sent on the first network link 40a. The transmitting scheduler 24 uses the calculated difference in propagation delay between the different network links to determine the transmission order of data packets, and which of the network links 40a-40d to use (step S05).

In the above described example, when picking data from the overall send window 22 to be transmitted on the second network link 40b, the 15ms propagation time delay can be used together with an estimate of network link bandwidths (estimated in a conventional manner such as packet-pair probing, accounting previously acknowledged data, using TCP metrics or being guided by physical layer supplied meta-data such as modulation and coding scheme selection or channel conditions) to choose more recent data in order to compensate for the difference in propagation delay. For example, if the first network link 40a is estimated to be operating at 1 Mbit/s and data has just been sent using the first network link 40a, the transmitting scheduler skips the next 15Kbits of the send window before selecting any data to be sent by the second network link 40b. Assuming the first and second network links 40a, 40b continue to operate as estimated, data from the second network link 40b will then arrive at the receiving inverse multiplexer 50 in the correct order and without increasing latency. If the send window 22 does not contain more than 15KBits of queued data, then the bandwidth can be conserved by prohibiting use of the slower second network link 40b until either the send window 22 has more than 15Kbits of queued data or the speed and quality of the second network link 40b improves to the extent that sending again becomes beneficial. Alternatively, one of a number of retransmission mechanisms may decide to utilise the second network link 40b instead of letting it idle.

The transmitting scheduler 24, not only bases the determination of how the data is split between the various network links on the calculated propagation delay, but also on the calculated round-trip-times of each network link, the estimated bandwidths, and other metrics (or statistics) from the TCP.

According to the above, it can be seen that the transmitting scheduler 24, by processing the additional data sent with acknowledgement messages received from the receiving scheduler 54, together with the locally stored transmission times (time-stamps), can calculate the unidirectional propagation delay difference between different network links 40a - 40d. This does not require synchronised clocks at the server and mobile device. By comparing the send time-stamp of each data packet together with the time difference returned in acknowledgements (for duplicate data), the propagation delay times can be calculated. The propagation delay times are then used together with the conventionally collected bandwidth, round-trip-time estimates, and the calculated round-trip times of each data link, to send data deliberately out-of-order to account for differing network link delays. If the estimates are sufficiently accurate, data should then start to arrive in the expected order at the mobile device, thereby approaching perfect aggregation.

In addition to out of order transmission, the transmitting inverse multiplexer 20 can also use the gained metrics to minimise the size of the overall send window 22. When out-of-order sending is in operation, the transmitting inverse multiplexer can calculate how large the overall send window 22 needs to be to enable data to be supplied, based upon the bandwidths and latencies. Limiting the size of the send window 22 prevents the addition of excess latency to the overall network link, and conversely placing a configured upper limit on that window size will also prevent heterogeneous network links whose delay is too great from being utilised to send new unique data.

In some arrangements, it is preferable that there are mechanisms for deliberate retransmission of data on different network links, even if a network link is determined to be unreliable or slow. This is because retransmissions are needed to update and refresh the metrics used by the transmitting scheduler 24 to ensure that the transmitting scheduler 24 has a good model of the network link characteristics. For example, overtime an operating network link may improve from being the slowest network link to such an extent that it becomes the fastest or most reliable network link. Without some form of deliberate retransmission over, or limited use of, such a network link, the transmitting inverse multiplexer 20 is not able to determine the improvement in the network link, and can not make better use of the network link as it improves. Conversely, a network link can deteriorate overtime from being a good network link to being a poor network link, and so a method of detecting changes in the network link characteristics is very useful.

One such retransmission mechanism is based on how much unacknowledged data is present on a network link. In particular, if the amount of unacknowledged data is less than some preset value when a network link is ready for transmission, then some unacknowledged data from the inverse multiplexer's send window 22 is duplicated into the network link specific send window of that network link. This ensures that, rather than idling, under-utilised network links 40a - 40d are used to add redundancy to information transfer, while also collecting statistics on the network link itself. If sufficient traffic is present, the network links should automatically contain enough data that this type of deliberate duplication ceases, and the network links naturally operate in an aggregating manner.

A second retransmission mechanism uses the estimated network link-specific propagation delay estimates, and round-trip time, to determine if either the acknowledgement for some sent data is late, or if sending the same data on a new network link may result in a faster transfer and earlier acknowledgement for the data. This ensures quick recovery from a failed network link, and also increases the rate at which metrics are collected for a network link whose properties start to diverge from the collected statistics.

As discussed above, in embodiments of the present invention duplicate transmission and reception is not entirely bad. Although bandwidth is, in one sense, wasted due to duplicated data being sent and then discarded, in another sense the duplicated data allows valuable timing information to be gathered and used to provide feedback to improve the behaviour of the transmitting inverse multiplexer. It is the structure and content of the acknowledgements that allow not only for each network link's round-trip-time to be estimated, but also for the relative differences in unidirectional propagation delay for each network link to be computed.

For mobile networks where the network link is often asymmetric and optimised for faster downlink than uplink, being able to determine the individual properties of each leg of the round-trip is important in producing a high performing inverse multiplexer.

According to the deliberate retransmission mechanisms, new network links, idle network links, or those whose properties start to diverge from that estimated cause increased retransmissions, which in turn updates the sender measurements at a higher rate. This is particularly important in situations where one or both of the network devices is moving.

The use of the TCP protocol for the lower transport sub-layers 130b ensures the overall scheme operates on any TCP capable network, allowing the traversal of firewalls, routers, bridges and switches. TCP also ensures fair use of each network link with respect to other network users, whether they are using a simple TCP connection, or an aggregating connection as described.

The communication system of the present invention has particular advantage when data being transferred between the network devices is real time data. In particular, because of the interactions between the transmitting scheduler and receiving scheduler, the available network links are more efficiently utilised to achieve a high bandwidth together with low latency. Furthermore, because duplicate data may be sent, any changes in the performance of the network links, or additional network links becoming available, are easily detected and data can be transferred to these links if desired to maintain high bandwidths. This results in a highly flexible efficient transmission system.

The inverse multiplexers 20, 50 are shown as separate devices to the server 10 and mobile device 60 in figure 1. In an embodiment, the transmitting inverse multiplexer 20 is mounted on an interface board (removably) installed within the server 10. In another embodiment, the inverse multiplexer 50 is a hardware device that is removably connected to the mobile device 60 via a USB port, an "upgrade port" or any other suitable connector. Alternatively, the inverse multiplexers can be formed integrally as part of the hardware of the server 10 and the mobile device 60, or the inverse multiplexers 10, 50 may be embodied as a logical component integrated into the server and mobile device software or protocol stack.

In the illustrated embodiment, for ease of explanation only the transmission of downlink data from a server 10 to a mobile device 60 has been considered. The present invention is equally applicable to the transmission of uplink data from the mobile device 60 to the server 10, in which case the functionality of the transmitting inverse multiplexer 20 and the receiving inverse multiplexer 50 are interchanged. In practice, in many embodiments a first transceiver device or software module, having the functionality of both the transmitting inverse multiplexer 20 and the receiving inverse multiplexer 50, is connected to the server 10 and a second transceiver device or software module, also having the functionality of both the transmitting inverse multiplexer 20 and the receiving inverse multiplexer 50, is connected to the mobile device 60.

The number of network link specific send windows 26a - 26d and network link specific reception windows 56a-56d depends on the number of network links 40a-40d used. In situations in which only one network link 40 is available, the transmitting scheduler transmits all data over that single network link and requires only one reception window. In an alternative arrangement, particularly when the inverse multiplexers are embodied in software, the numbers of link specific transceivers 28a-28d, 58a - 58d and network link specific windows 26a-26d, 56a-56d may be adapted as the number of network links 40a-40d change and become available for data transmission. When the function of the transmitting inverse multiplexer 20 and receiving inverse multiplexer 50 swap (when transmitting data in the opposite direction to that shown in figure 1), the functions of the link specific transceivers 28a-28d, 58a - 58d, the send and receive windows 22, 26a-26d, 56a-56d, 52, and schedulers 24, 54, also swap.

Some or all of the transmitting inverse multiplexer and the receiving inverse multiplexer may be implemented by a computer program using some form of processing apparatus. The invention therefore also extends to computer programs, particularly computer programs on or in a carrier, adapted for putting the invention into practice. The program may be in the form of source code, object code, a code intermediate to source code and object code such as in partially compiled form, or in any other form suitable for using in the implementation of the processes according to the invention.

The carrier may be any entity or device capable of carrying the program. For example, the carrier may comprise a storage medium, such as a ROM, for example a CD-ROM ornon-volatile semiconductor memories, or a magnetic recording medium, for example a floppy disc or a hard disc, or an optical recording medium. Further, the carrier may be a transmissible carrier such as an electronic or optical signal which may be conveyed via electrical or optical cable or by radio or other means.

The carrier may be an integrated circuit in which the program is embedded, or an integrated circuit adapted for performing the program steps, or for use in the performance of the relevant processes.Some or all of the transmitting inverse multiplexer and the receiving inverse multiplexer may be implemented in an Application Specific Integrated Circuit (ASIC) or a Field Programmable Gate Array (FPGA).

Although the present invention has been described in terms of preferred embodiments, it will be appreciated that various modifications and alternations may be made by those skilled in the art without departing from the scope of the invention. The invention should therefore be measured in terms of the claims that follow.

**Claims**

1. A method of transmitting data from a first network device (20) to a second network device (50) using a plurality of network links (40a-40d), the method comprising the first network device (20):

   sending (S00) first data to the second network device (50) over a first network link at a first transmission time;
   sending (S01) second data to the second network device (50) over a second network link at a second transmission time;
   receiving (S02) from the second network device (50) an indication of the time difference between reception of the first data over the first network link and reception of the second data over the second network link;
   calculating (S04) a propagation time difference between the time taken for the first data to reach the second network device (50) over the first network link and the second data to reach the second network device (50) over the second network link using the received time difference indication and the first and second transmission times;
determining (S05) a network link configuration and data sending order using the calculated propagation time difference.

2. A method according to claim 1, wherein the second data is a retransmission of the first data.

3. A method according to claim 1, wherein the propagation time difference is calculated by subtracting the difference between the second transmission time and the first transmission time from the received time difference.

4. A method according to claim 1, wherein the step of determining a network link configuration and data sending order further includes using an estimate of the bandwidths of the network links.

5. A method according to claim 1, further comprising:

receiving an acknowledgement from the second network device (50) of receipt of the first data;
receiving an acknowledgement from the second network device (50) of receipt of the second data;
calculating the round-trip time of the first network link and the round-trip time of the second network link, wherein the step of determining a network link configuration and data sending order further includes using the calculated round-trip times.

6. A method according to claim 5, wherein the second acknowledgement includes said time difference indication.

7. A method according to claim 1, further comprising sending the data out-of-order over two or more of the plurality of network links (40a-40d).

8. A method according to claim 1, further comprising sending duplicate data over the plurality of network links (40a-40d).

9. A method of processing data sent from a first network device (20) to a second network device (50) using a plurality of network links (40a-40d), the method comprising the second network device (50):

receiving first data from the first network device (20) over a first network link at a first reception time;
receiving second data from the first network device (20) over a second network link at a second reception time;
calculating the time difference between reception of the first data over the first network link and reception of the second data over the second network link; and
sending an indication of the calculated time difference to the first network device (20).

10. A method according to claim 9, wherein the second data is a retransmission of the first data.

11. A method according to claim 10, further comprising:

following receipt of the first data, sending an acknowledgement to the first network device (20) of the receipt of the first data;
following receipt of the second data, sending an acknowledgement to the first network device (20) of the receipt of the second data;
wherein the second acknowledgement includes said time difference indication.

12. An inverse multiplexer (20) comprising:

an overall send window (22) for receiving data to be transmitted to a remote network device (50); and
a scheduler (24) for directing data from the overall send window (22) over the plurality of network links (40a-40d) to the remote network device (50);
wherein the scheduler (24) is configured to:

send first data over a first network link at a first transmission time to the remote network device (50);
send second data over a second network link at a second transmission time to the remote network device (50);
receive from the remote network device (50) an indication of a time difference between the reception of said first data over the first network link and reception of said second data over the second network link;

calculate a propagation time difference between the first network link and the second network link using the received time difference indication and the first and second transmission times; and

determine a network link configuration and data sending order using the calculated propagation time difference

13. A network device (50) comprising:

a first receiver (58a-58d) to receive first data from a remote network device (20) over a first network link at a first reception time;

a second receiver (58a-58d) to receive second data from the remote network device (20) over a second network link at a second reception time;

a calculator to calculate the time difference between reception of the first data over the first network link and reception of the second data over the second network link;

a transmitter to send an indication of the calculated time difference to the remote network device.

14. An inverse multiplexing device comprising an inverse multiplexer as claimed in claim 12 and a network device as claimed in claim 13.

15. A computer program product comprising a set of instructions which, when executed by a a programmable device, cause the programmable device to implement a method as claimed in any of claims 1 to 11.


**Patentansprüche**

1. Verfahren zum Übertragen von Daten von einem ersten Netzwerkgerät (20) an ein zweites Netzwerkgerät (50) unter Verwendung einer Vielzahl von Netzwerkverbindungen (40a - 40d), wobei das Verfahren mit dem ersten Netzwerkgerät (20) umfasst:

Senden (S00) erster Daten an das zweite Netzwerkgerät (50) über eine erste Netzwerkverbindung zu einer ersten Übertragungszeit;

Senden (S01) zweiter Daten an das zweite Netzwerkgerät (50) über eine zweite Netzwerkverbindung zu einer zweiten Übertragungszeit;

Empfangen (S02) eines Indikators für eine Zeitdifferenz zwischen dem Empfang der ersten Daten über die erste Netzwerkverbindung und dem Empfang der zweiten Daten über die zweite Netzwerkverbindung von dem zweiten Netzwerkgerät (50);

Berechnen (S04) einer Laufzeitdifferenz zwischen der Zeit, die benötigt wurde, damit die ersten Daten das zweite Netzwerkgerät (50) über die erste Netzwerkverbindung und die zweiten Daten das zweite Netzwerkgerät (50) über die zweite Netzwerkverbindung erreichen unter Verwendung der empfangenen Zeitdifferenzindikation und der ersten und zweiten Übertragungszeiten;

Bestimmen (S05) einer Netzwerkverbindungskonfiguration und einer Datenversandfolge unter Verwendung der berechneten Laufzeitdifferenz.

2. Verfahren nach Anspruch 1, wobei die zweiten Daten eine erneute Übertragung der ersten Daten sind.

3. Verfahren nach Anspruch 1, wobei die Laufzeitdifferenz durch Subtrahieren des Unterschieds zwischen der zweiten Übertragungszeit und der ersten Übertragungszeit von der empfangenen Zeitdifferenz berechnet wird.

4. Verfahren nach Anspruch 1, wobei der Schritt des Bestimmens der Netzwerkverbindungskonfiguration und der Datenversandfolge ferner das Verwenden einer Abschätzung der Bandbreite der Netzwerkverbindungen umfasst.

5. Verfahren nach Anspruch 1, ferner umfassend:

Empfangen einer Bestätigung vom zweiten Netzwerkgerät (50), dass die ersten Daten empfangen wurden;

Empfangen einer Bestätigung vom zweiten Netzwerkgerät (50), dass die zweiten Daten empfangen wurden;

Berechnen der Umlaufzeit der ersten Netzwerkverbindung und der Umlaufzeit der zweiten Netzwerkverbindung, wobei der Schritt des Bestimmens der Netzwerkverbindungskonfiguration und der Datenversandfolge ferner das Verwenden der berechneten Umlaufzeiten umfasst.

**6.** Verfahren nach Anspruch 5, wobei die zweite Bestätigung die Zeitdifferenzindikation umfasst.

**7.** Verfahren nach Anspruch 1, ferner umfassend das Senden der Daten außerhalb der Folge über zwei oder mehr der mehreren Netzwerkverbindungen (40a - 40d).

**8.** Verfahren nach Anspruch 1, ferner umfassend das Senden von duplizierten Daten über die mehreren Netzwerkverbindungen (40a - 40d).

**9.** Verfahren zum Verarbeiten von Daten, die von einem ersten Netzwerkgerät (20) an ein zweites Netzwerkgerät (50) unter Verwendung mehrerer Netzwerkverbindungen (40a - 40d) gesendet wurden, wobei das Verfahren mit dem zweiten Netzwerkgerät (50) umfasst:

> Empfangen erster Daten vom ersten Netzwerkgerät (20) über eine erste Netzwerkverbindung zu einer ersten Empfangszeit;
> Empfangen zweiter Daten vom ersten Netzwerkgerät (20) über eine zweite Netzwerkverbindung zu einer zweiten Empfangszeit;
> Berechnen des Zeitunterschieds zwischen dem Empfangen der ersten Daten über die erste Netzwerkverbindung und dem Empfangen der zweiten Daten über die zweite Netzwerkverbindung; und
> Senden eines Indikators der berechneten Zeitdifferenz an das erste Netzwerkgerät (20).

**10.** Verfahren nach Anspruch 9, wobei die zweiten Daten eine erneute Übertragung der ersten Daten sind.

**11.** Verfahren nach Anspruch 10, ferner umfassend:

> nachfolgend auf den Empfang der ersten Daten, Senden einer Benachrichtigung an das erste Netzwerkgerät (20), dass die ersten Daten empfangen wurden;
> nachfolgend auf den Empfang der zweiten Daten, Senden einer Benachrichtigung an das erste Netzwerkgerät (20), dass die zweiten Daten empfangen wurden;
> wobei die zweite Benachrichtigung die Zeitdifferenzindikation umfasst.

**12.** Inverser Multiplexer (20) umfassend
ein Gesamtsendefenster (22) zum Empfangen von Daten, die an ein entferntes Netzwerkgerät (50) übertragen werden sollen; und
einen Planer (24) zum Leiten der Daten von dem Gesamtsendefenster (22) über die mehreren Netzwerkverbindungen (40a - 40d) an das entfernte Netzwerkgerät (50);
wobei der Planer (24) eingerichtet ist zum:

> Senden erster Daten über eine erste Netzwerkverbindung zu einer ersten Übertragungszeit an das entfernte Netzwerkgerät (50);
> Senden zweiter Daten über eine zweite Netzwerkverbindung zu einer zweiten Übertragungszeit an das entfernte Netzwerkgerät (50);
> Empfangen eines Indikators einer Zeitdifferenz zwischen dem Empfang der ersten Daten über die erste Netzwerkverbindung und dem Empfang der zweiten Daten über die zweite Netzwerkverbindung vom entfernten Netzwerkgerät (50);
> Berechnen der Laufzeitdifferenz zwischen der ersten Netzwerkverbindung und der zweiten Netzwerkverbindung unter Verwendung der empfangenen Zeitdifferenzindikation und der ersten und zweiten Übertragungszeiten; und
> Bestimmen einer Netzwerkverbindungskonfiguration und einer Datensendefolge unter Verwendung der berechneten Laufzeitdifferenz.

**13.** Netzwerkgerät (50) umfassend:

> einen ersten Empfänger (58a - 58d) zum Empfangen erster Daten von einem ersten Netzwerkgerät (20) über eine erste Netzwerkverbindung zu einer ersten Empfangszeit;
> einen zweiten Empfänger (58a - 58d) zum Empfangen zweiter Daten vom entfernten Netzwerkgerät (20) über eine zweite Netzwerkverbindung zu einer zweiten Empfangszeit;
> einen Berechner zum Berechnen der Zeitdifferenz zwischen dem Empfang der ersten Daten über die erste Netzwerkverbindung und dem Empfang der zweiten Daten über die zweite Netzwerkverbindung;

einen Sender zum Senden eines Indikators der berechneten Zeitdifferenz an das entfernte Netzwerkgerät.

**14.** Ein inverses Multiplexgerät umfassend einen inversen Multiplexer, wie in Anspruch 12 beansprucht, und ein Netzwerkgerät, wie in Anspruch 13 beansprucht.

**15.** Computerprogrammprodukt umfassend einen Satz von Instruktionen, die, wenn sie durch ein programmierbares Gerät ausgeführt werden, das programmierbare Gerät veranlassen, ein Verfahren, wie es in einem der Ansprüche 1 bis 11 beansprucht ist, zu implementieren.

**Revendications**

**1.** Procédé de transmission de données depuis un premier dispositif de réseau (20) à un deuxième dispositif de réseau (50) en utilisant une pluralité de liaisons de réseau (40a-40d), le procédé consistant, par le premier dispositif de réseau (20), à :

envoyer (S00) des premières données au deuxième dispositif de réseau (50) sur une première liaison de réseau à un premier temps de transmission ;
envoyer (SO1) des deuxièmes données au deuxième dispositif de réseau (50) sur une deuxième liaison de réseau à un deuxième temps de transmission ;
recevoir (S02) à partir du deuxième dispositif de réseau (50) une indication de la différence de temps entre la réception des premières données sur la première liaison de réseau et la réception des deuxièmes données sur la deuxième liaison de réseau ;
calculer (S04) une différence de temps de propagation entre le temps nécessaire pour que les premières données atteignent le deuxième dispositif de réseau (50) sur la première liaison de réseau et pour que les deuxièmes données atteignent le deuxième dispositif de réseau (50) sur la deuxième liaison de réseau en utilisant l'indication de différence de temps reçue et les premier et deuxième temps de transmission ;
déterminer (S05) une configuration de liaison de réseau et un ordre d'envoi de données en utilisant la différence de temps de propagation calculée.

**2.** Procédé selon la revendication 1, dans lequel les deuxièmes données représentent une retransmission des premières données.

**3.** Procédé selon la revendication 1, dans lequel la différence de temps de propagation est calculée en soustrayant la différence entre le deuxième temps de transmission et le premier temps de transmission de la différence de temps reçue,

**4.** Procédé selon la revendication 1, dans lequel l'étape consistant à déterminer une configuration de liaison de réseau et un ordre d'envoi de données comporte en outre le fait d'utiliser une estimation des bandes passantes des liaisons de réseau.

**5.** Procédé selon la revendication 1, consistant en outre à :

recevoir un accusé de réception des premières données à partir du deuxième dispositif de réseau (50) ;
recevoir un accusé de réception des deuxièmes données à partir du deuxième dispositif de réseau (50) ;
calculer le temps d'aller-retour de la première liaison de réseau et le temps d'aller-retour de la deuxième liaison de réseau, où l'étape consistant à déterminer une configuration de liaison de réseau et un ordre d'envoi de données comporte en outre le fait d'utiliser les temps d'aller-retour calculés.

**6.** Procédé selon la revendication 5, dans lequel le deuxième accusé de réception comporte ladite indication de différence de temps.

**7.** Procédé selon la revendication 1, comprenant en outre l'envoi des données sans ordre sur deux ou plus de deux de la pluralité de liaisons de réseau (40a-40d).

**8.** Procédé selon la revendication 1, comprenant en outre l'envoi de données dupliquées sur la pluralité de liaisons de réseau (40a-40d).

**9.** Procédé de traitement de données envoyées depuis un premier dispositif de réseau (20) à un deuxième dispositif de réseau (50) en utilisant une pluralité de liaisons de réseau (40a-40d), le procédé consistant, par le deuxième dispositif de réseau (50), à :

> recevoir des premières données à partir du premier dispositif de réseau (20) sur une première liaison de réseau à un premier temps de réception ;
> recevoir des deuxièmes données à partir du premier dispositif de réseau (20) sur une deuxième liaison de réseau à un deuxième temps de réception ;
> calculer la différence de temps entre la réception des premières données sur la première liaison de réseau et la réception des deuxièmes données sur la deuxième liaison de réseau ; et
> envoyer une indication de la différence de temps calculée au premier dispositif de réseau (20).

**10.** Procédé selon la revendication 9, dans lequel les deuxièmes données représentent une retransmission des premières données.

**11.** Procédé selon la revendication 10, consistant en outre à :

> envoyer, suite à la réception des premières données, un accusé de réception des premières données au premier dispositif de réseau (20) ;
> envoyer, suite à la réception des deuxièmes données, un accusé de réception des deuxièmes données au premier dispositif de réseau (20) ;
> dans lequel le deuxième accusé de réception comporte ladite indication de différence de temps.

**12.** Multiplexeur inverse (20) comprenant :

> une fenêtre d'envoi globale (22) pour recevoir des données à transmettre à un dispositif de réseau distant (50) ; et
> un planificateur (24) pour diriger des données depuis la fenêtre d'envoi globale (22) sur la pluralité de liaisons de réseau (40a-40d) vers le dispositif de réseau distant (50) ;
> dans lequel le planificateur (24) est configuré pour :
>
> > envoyer des premières données sur une première liaison de réseau à un premier temps de transmission au dispositif de réseau distant (50) ;
> > envoyer des deuxièmes données sur une deuxième liaison de réseau à un deuxième temps de transmission au dispositif de réseau distant (50) ;
> > recevoir à partir du dispositif de réseau distant (50) une indication d'une différence de temps entre la réception desdites premières données sur la première liaison de réseau et la réception desdites deuxièmes données sur la deuxième liaison de réseau ;
> > calculer une différence de temps de propagation entre la première liaison de réseau et la deuxième liaison de réseau en utilisant l'indication de différence de temps reçue et les premier et deuxième temps de transmission ; et
> > déterminer une configuration de liaison de réseau et un ordre d'envoi de données en utilisant la différence de temps de propagation calculée.

**13.** Dispositif de réseau (50) comprenant :

> un premier récepteur (58a-58d) pour recevoir des premières données à partir d'un dispositif de réseau distant (20) sur une première liaison de réseau à un premier temps de réception ;
> un deuxième récepteur (58a-58d) pour recevoir des deuxièmes données à partir du dispositif de réseau distant (20) sur une deuxième liaison de réseau à un deuxième temps de réception ;
> un dispositif de calcul pour calculer la différence de temps entre la réception des premières données sur la première liaison de réseau et la réception des deuxièmes données sur la deuxième liaison de réseau ;
> un émetteur pour envoyer une indication de la différence de temps calculée au dispositif de réseau distant.

**14.** Dispositif de multiplexage inverse comprenant un multiplexeur inverse tel que revendiqué dans la revendication 12 et un dispositif de réseau tel que revendiqué dans la revendication 13.

**15.** Produit de programme informatique comprenant un ensemble d'instructions qui, lorsqu'elles sont exécutées par un dispositif programmable, amènent le dispositif programmable à mettre en oeuvre un procédé tel que revendiqué dans l'une des revendications 1 à 11.

FIG. 1.

# Fig. 2.

# Fig. 3.

Transmitting inverse multiplexer

Receiving inverse multiplexer

0

100

10

P1 Data

125

P1 Acknowledgement

30

45

P2 Data

160

P2 Acknowledgement

80

Time / Ts

Time / Tr

# Fig. 4.

Send data to receiving inverse multiplexer over a first network link, and record time of transmission — S00

Send duplicate data to receiving inverse multiplexer over a second network link, and record time of transmission — S01

Receive acknowledgement from receiving inverse multiplexer, including a time difference and network link identification — S02

S03

Is time difference and network link identification null?

YES

NO

S04 — Calculate a propagation delay difference between the first network link and the second network link using the time difference and the transmission times over the first and second network links

S05 — Determine a network link configuration and data sending order using the calculated propagation delay difference.

# Fig. 5.

Receive data from transmitting inverse multiplexer — S10

↓

Reception window look-up — S11

↓

S12 — Is data duplicate?

NO →

Note local time and network link.
Send an acknowledgement to transmitting inverse multiplexer, with null values for time difference and network link — S13

YES →

S14 — Look up record of original data to obtain reception time and network link used

↓

S15 — Compare reception times of original and duplicate data, and calculate the time difference

↓

S16 — Send acknowledgment to transmitting inverse multiplexer with the calculated time difference and identification of the network link used for original data

↓

S17 — Discard duplicate data

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070247515 A
- EP 1608112 A